# EUROPÄISCHE PATENTSCHRIFT

(11) **EP 2 025 215 B1**
(45) Veröffentlichungstag und Bekanntmachung des Hinweises auf die Patenterteilung: **30.03.2011**
(21) Anmeldenummer: 08012889.5
(22) Anmeldetag: 17.07.2008
(51) Int. Cl.: A01C 7/20, A01B 63/32

(54) **Saatgut- und/oder Düngerverteilmaschine**
Seed and/or fertiliser distributor machine
Machine de répartition de semences et/ou d'engrais

(30) Priorität: 13.08.2007 DE 102007038262
(43) Veröffentlichungstag der Anmeldung: 18.02.2009
(73) Patentinhaber: Kverneland ASA, 4355 Kvernaland (NO)
(72) Erfinder: Friel, Holger, 19288 Glaisin (DE); Bastian, Klaus, 79777 Ühlingen-Birkendorf (DE)
(74) Vertreter: Schweiger, Johannes

(56) Entgegenhaltungen:
- EP-A- 0 692 179
- WO-A-2007/050031
- CA-A1- 2 210 238
- US-A1- 2003 164 125

## Beschreibung

Die Erfindung betrifft eine Saatgut- und/oder Düngerverteilmaschine zur Einbringung von Saatgut und/oder Dünger in einen Ackerboden mit einem Basisgestell, mindestens einem mit dem Basisgestell schwenkbar verbundenen Scharschienenrahmen zur Aufnahme mehrerer Säschare, mindestens einer am Scharschienenrahmen angebrachten Schardruckhydraulik zur Druck- und/oder Zugbeaufschlagung der Säschare relativ zum Scharschienenrahmen mit einer resultierenden, zum Ackerboden gerichteten Scharkraft K und mindestens einer Scharschienenrahmenhydraulik zur Druck- und/oder Zugbeaufschlagung des Scharschienenrahmens relativ zum Basisgestell.

Pneumatische Sämaschinen mit an den das Gebläse antreibenden Hydraulikmotor angeschlossenen Hydraulikzylindern zum Drücken der Scharrahmen in Richtung des Ackerbodens sind in der DE 10 2005 052 473 A1 offenbart.

Grundsätzlich bestehen Verteilmaschinen aus einem Grundrahmen und/oder Basisgestell, das einen Vorratsbehälter für Saatgut/Dünger mit möglichst großem Volumen trägt. An dem Basisgestell sind quer zur Fahrtrichtung Säschare an einem Scharschienenrahmen aufgereiht, wobei der Scharschienenrahmen zum Transport in eine der Straßenverkehrsordnung entsprechende Transportstellung zusammengeklappt/-geschwenkt werden kann.

Die Saatgut- und/oder Düngerverteilmaschine kann zum Anbau im Dreipunkt des Schleppers oder als Anhängemaschine mit eigenem Fahrwerk ausgeführt sein.

Die Säschare sind am Scharschienenrahmen über einen Mechanismus mit federnden Elementen befestigt und weisen eine Vorspannung in Richtung des Ackerbodens auf, so dass die Säschare bei der Bestellung des Ackers nicht nur durch ihr Eigengewicht in diesen eindringen. Der Mechanismus kann verstellt werden, um unterschiedlich hohe Schardrücke bzw. Scharkraft in Richtung des Ackerbodens und damit eine möglichst gleichmäßige Ablagetiefe des Saatguts und/oder Düngers zu erreichen. Die Säschare weisen meist Andruck-/Tiefenführungsrollen auf, wodurch die maximale Eindringtiefe in den Boden definiert wird. Die Eindringkraft/ der Schardruck, die zum Überwinden der entsprechenden Gegenkraft des Bodens erforderlich ist, hängt zum Beispiel von der Beschaffenheit des Bodens, der Geometrie der Säschare sowie der Fahrgeschwindigkeit ab.

Die CA 2,210,238 A1 zeigt eine Sämaschine mit hydraulisch verstellbarer Arbeitstiefe und die US 2003/0164125 A1 zeigt eine kombinierte Dünge- und Sämaschine, bei der die Dünge- und die Säreihen mit einer gekoppelten Hydraulik einklappbar sind.

Bei den bekannten Verteilmaschinen wird der Schardruck/die Scharkraft für jede Teilbreite des Scharschienenrahmens manuell über eine Spindel oder Hydraulikzylinder als Fernbetätigung eingestellt.

Bei Verteilmaschinen mit großer Arbeitsbreite sind im Bereich der seitlichen Enden des Scharschienenrahmens Tasträder angebracht, mit deren Hilfe der Scharschienenrahmen dem Gelände folgt. Diese Tasträder werden mit der Differenz aus dem Schardruck und dem Anlagedruck der Seitenteile des Scharschienenrahmens beaufschlagt. Die zum Eindringen der Schare in den Boden erforderliche Kraft und damit der erforderliche Schardruck hängt von der Art des Bodens ab. Sandböden erfordern einen sehr viel geringeren Schardruck als schwere Lehmböden. Bekannte Verteilmaschinen großer Arbeitsbreite weisen üblicherweise gegenüber dem Grundrahmen fixierte Seitenteile auf. Dadurch kann es zu unerwünschten Ergebnissen der Saatgutablage über die Breite des Scharschienenrahmens kommen, beispielsweise einer zu flachen oder zu tiefen Saatgutablage auf Grund zu niedrigen oder zu hohen Auflagedrucks der Seitenteile.

Aufgabe der vorliegenden Erfindung ist es daher, einen möglichst genau angepassten, einstellbaren Schardruck (Scharkraft) über die gesamte Scharschienenrahmenbreite zu gewährleisten, der auch bei Bodenunregelmäßigkeiten wie unebenem Gelände und/oder wechselnden Böden eine möglichst gleich bleibende Sätiefe und definierte Saatgutablage erreicht.

Grundidee der vorliegenden Erfindung ist es dabei, sowohl die Säschare am Scharschienenrahmen mit einer Schardruckhydraulik bezogen auf den Scharschienenrahmen zu beaufschlagen als auch den Scharschienenrahmen mit einer Scharschienenrahmenhydraulik bezogen auf das Basisgestell zu beaufschlagen und die Schardruckhydraulik mit der Scharschienenrahmenhydraulik hydraulisch zu koppeln.

Vorteil eines hydraulischen Schardrucksystems ist, dass das Hydraulikmedium in einen Hydraulikspeicher verdrängt oder über ein den hydraulischen Druck regelndes Ventil abgelassen werden kann, so dass die Säschare selbst im Bereich einer Bodenunregelmäßigkeit in ihrer Sollablagetiefe arbeiten. Muss beispielsweise im äußeren Bereich des Scharschienenrahmens eine Erhebung überfahren werden, kann der seitliche Ausleger ohne Veränderung des Schardrucks durch die erfindungsgemäße Ausgestaltung nach oben ausweichen und anschließend wieder in seine Ausgangsstellung zurückkehren. Genauso verhält es sich umgekehrt beim Durchfahren einer Senke.

Sowohl die Schardruckeinstellung durch die Schardruckhydraulik als auch das Herunterdrücken der Seitenarme des Scharschienenrahmens durch die Scharschienenrahmenhydraulik unterliegen dabei der gleichen physikalischen Gesetzmäßigkeit, weshalb eine Kopplung der beiden Hydrauliksysteme sich überraschend positiv auf die Konstantheit der Ablage auswirkt.

Eine Veränderung des Schardrucks auch während der Bearbeitung, beispielsweise beim Wechsel von einem Sandboden zu einem schweren Lehmboden, ist bei der erfindungsgemäßen Ausgestaltung möglich, was die Handhabbarkeit der Verteilmaschine deutlich verbessert und die Bearbeitungszeit beim Verteilen des Saatguts- und/oder Düngers deutlich verringern kann. Auch eine Kopplung mit geographischen und/oder geodätischen Daten und damit eine vollautomatische Steuerung wird erst durch die Erfindung ermöglicht.

Die erfindungsgemäße Aufgabe wird mit den Merkmalen des Patentanspruchs 1 gelöst, wobei vorteilhafte Weiterbildungen der Erfindung in den Unteransprüchen angegeben sind. In den Rahmen der Erfindung fallen auch sämtliche Kombinationen aus zumindest zwei von in der Beschreibung, den Ansprüchen und/oder den Figuren offenbarten Merkmalen.

Die erfindungsgemäß beschriebenen Ausgestaltungen der Verteilmaschinen können grundsätzlich sowohl bei mechanischen oder pneumatischen Verteilmaschinen vorgesehen werden. Soweit Ausführungsformen mit einem hydraulischen Gebläseantrieb betroffen sind, sind diese für pneumatische Verteilmaschinen geeignet.

Durch die Kopplung der beiden Hydrauliken stehen diese in einem direkten Proportionalitätsverhältnis, so dass ein Kraftanstieg von der Scharseite zu einer entsprechenden Gegenkraft sowohl in der Schardruckhydraulik als auch in der Scharschienenrahmenhydraulik in oben beschriebener angepasster Proportionalität führt. Hierdurch kann sogar auf bisher erforderliche Anschläge (Spacer), die zur Einstellung eines Maximalgegendrucks erforderlich waren, um ein Kräftegleichgewicht herzustellen, verzichtet werden. Die Folge ist eine deutlich geringere Anfälligkeit gegen Extrembelastungen der die Scharkraft aufnehmenden Bauteile mit dem Effekt, dass gefährliche Beschädigungen und Ausfallzeiten möglichst vermieden werden.

Weiterhin ist von Vorteil, dass keine Sonderanfertigungen für die Hydraulikzylinder der Schardruckhydraulik mehr nötig sind und Standardzylinder verwendet werden können.

Ein weiterer Vorteil besteht darin, dass die außen an den Seitenarmen des Scharschienenrahmens angeordneten Tasträder vom minimal bis maximal möglichen Schardruck mit im Wesentlichen identischem Auflagedruck beaufschlagt werden, wodurch tiefe Fahrspuren im Acker und Beschädigungen im Bereich der Tasträder vermieden werden.

In Weiterbildung der Erfindung ist mit Vorteil vorgesehen, dass der Scharschienenrahmen durch mindestens einen ersten Hydraulikzylinder von einer Arbeitsstellung in eine Wendestellung und weiter in eine Transportstellung schwenkbar ist. Durch diese Maßnahme wird die Bedienung der Verteilmaschine während der Bestellung des Feldes deutlich erleichtert, da die verschiedenen Stellungen vom Führerhaus der Zugmaschine gewählt werden können.

Bevorzugt ist eine Ausführungsform, bei der der Druck in der Schardruckhydraulik und/oder der Scharschienenrahmenhydraulik einstellbar, insbesondere regelbar ist. Auch hierdurch wird die Bedienbarkeit der Verteilmaschine vom Führerhaus aus bei unregelmäßiger Bodenbeschaffenheit vereinfacht. Von besonderem Vorteil ist es dabei, wenn die resultierende Scharkraft K einstellbar, insbesondere regelbar ist, insbesondere in Abhängigkeit von vorgegebenen, geographischen Koordinaten.

In einer weiteren Ausführungsform der Erfindung ist vorgesehen, dass die Schardruckhydraulik und/oder die Schienenrahmenhydraulik zur Versorgung mit Hydraulikmedium über eine Zuleitung an eine Hydraulikpumpe anschließbar sind, wobei die Zuleitung ein Druckbegrenzungsventil, insbesondere ein proportional geregeltes Druckbegrenzungsventil, aufweist. Hierdurch kann ein vorgegebener Hydraulikdruck eingestellt werden, wobei ein an die Hydraulik angeschlossener Stickstoffspeicher den Druck im System konstant oder auf einer flach ansteigenden Drucklinie halten kann. Bei Verwendung eines proportional geregelten Druckbegrenzungsventils kann der einzustellende Druckwert über eine Ferneinstellung vom Führerhaus verstellt werden, die mit einer Druckanzeige im Display der Bedieneinheit im Führerhaus kombinierbar ist.

Bei größeren Hüben und damit verbundenem höheren Volumen an Hydraulikmedium ist die Verwendung eines Druckminderventils statt eines Druckbegrenzungsventils zwischen Zuleitung und Rückleitung von Vorteil, wobei die Rückleitung mit Vorteil zur Rückführung von Hydraulikmedium von der Schardruckhydraulik und/oder der Scharschienenrahmenhydraulik zum Tank vorgesehen ist.

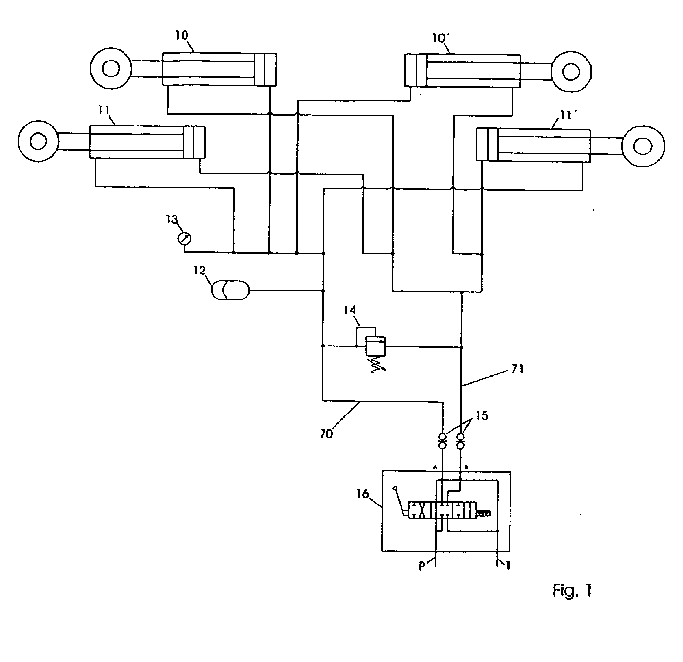

Vorteilhafterweise befindet sich das Schleppersteuerventil während des Betriebs der Anlage in der Position, in der P mit A und T mit B verbunden ist (siehe Figur 1).

In einer weiteren, vorteilhaften Ausgestaltung der Erfindung ist vorgesehen, dass ein 3/2-Wegeventil zwischen Schardruckhydraulik und/oder der Scharschienenrahmenhydraulik und der Schlepperhydraulik/Hydraulikpumpe vorgesehen ist, mit welchem die Schardruckhydraulik und/oder die Scharschienenrahmenhydraulik zwischen einer Betriebsstellung und einer Schwimmstellung schaltbar sind, insbesondere ausgebildet als vom ersten Hydraulikzylinder mechanisch betätigtes oder hydraulisch direkt gesteuertes oder vorgesteuertes 3/2-Wegeventil. In der Schwimmstellung sind Zuleitung und Rückleitung miteinander verbunden, so dass die im Kreislauf eingebundenen doppelt wirkenden Hydraulikzylinder auf beiden Seiten der Kolbenfläche mit identischem Druck beaufschlagt und entsprechend mit der Rücklaufleitung verbunden sind. Die Tasträder haben damit nur noch das Eigengewicht der Seitenarme zu tragen und erzeugen auf dem Vorgewende keine tiefen Fahrspuren.

Darüber hinaus kann das 3/2-Wegeventil als hydraulisch gesteuertes Ventil ausgestaltet sein, wobei das Hydrauliksignal von dem ersten Hydraulikzylinder gesendet werden kann, der zum Ausheben des Scharschienenrahmens auf dem Vorgewende dient.

In der Betriebsstellung ist die Hydraulik dagegen wie oben beschrieben geschaltet.

In Weiterbildung der Erfindung ist eine Gebläsehydraulik - nämlich der hydraulische Antrieb des Gebläses zur Förderung von Saatgut und/oder Dünger - von einem Vorratsbehälter zu den Säscharen mit der Schardruckhydraulik und/oder der Scharschienenrahmenhydraulik durch eine Abzweigleitung und eine Abzweigrückleitung gekoppelt, wobei vorzugsweise mindestens ein druckgeschaltetes Rückschlagventil vorgesehen ist, um Rückfluss von Hydraulikmedium in die Gebläsehydraulik zu vermeiden, während der Scharschienenrahmen ein/ausgeklappt wird. Durch diese Maßnahme erhöht sich der Bedienkomfort für den Benutzer. Weiterhin wird hierdurch das Gesamtsystem vor Überlast geschützt.

Um ein gleichmäßiges Einklappen/Ausklappen der Seitenarme des Scharschienenrahmens zu gewährleisten, ist in der Rückleitung mit Vorteil ein Mengenteiler zum Gleichlauf der Seitenarme beim Ein- und/oder Ausklappen der Seitenarme vorgesehen, wobei der Mengenteiler vorzugsweise durch zwei gegeneinander gerichtete Rückschlagventile kurzschließbar ist. Durch diese Maßnahme werden die beiden Seitenarme gleichlaufend ein- und ausgeklappt.

Es besteht auch die Möglichkeit, alle beschriebenen Hydraulikfunktionen unabhängig von der Schlepperhydraulik durch eine unabhängige (schlepperunabhängige) Hydraulikversorgung zu realisieren.

Weitere Vorteile, Merkmale und Einzelheiten der Erfindung ergeben sich aus der nachfolgenden Beschreibung bevorzugter Ausführungsbeispiele sowie an Hand der Zeichnungen. Diese zeigen in:
- Fig. 1:: einen erfindungsgemäßen Hydraulikschaltplan mit Druckbegrenzungsventil,
- Fig. 2:: einen erfindungsgemäßen Hydraulikschaltplan mit Druckminderventil,
- Fig. 3:: einen erfindungsgemäßen Hydraulikschaltplan mit 3/2-Wegeventil in Kombination mit einem Druckminderventil,
- Fig. 4:: einen erfindungsgemäßen Hydraulikschaltplan gemäß Fig. 3 mit hydraulisch gesteuertem 3/2-Wegeventil,
- Fig. 5:: einen erfindungsgemäßen Hydraulikschaltplan mit Anbindung an eine Gebläsehydraulik,
- Fig. 6:: einen erfindungsgemäßen Hydraulikschaltplan gemäß Fig. 5 mit einem Mengenteiler,
- Fig. 7:: einen erfindungsgemäßen Hydraulikschaltplan gemäß Fig. 6 mit eigener hydraulischer Versorgung unabhängig von einer Schlepperhydraulik,
- Fig. 8:: einen erfindungsgemäßen Hydraulikschaltplan gemäß Fig. 7 mit elektrisch betätigtem 4/3-Wegeventil,
- Fig. 9:: eine schematische Darstellung einer erfindungsgemäßen Saatgut- und/oder Düngerverteilmaschine und
- Fig. 10:: eine schematische Darstellung eines Seitenarms einer erfindungsgemäßen Saatgut- und/oder Düngerverteilmaschine.

In den Figuren sind gleiche Bauteile und Bauteile mit der gleichen Funktion mit den gleichen Bezugszeichen gekennzeichnet.

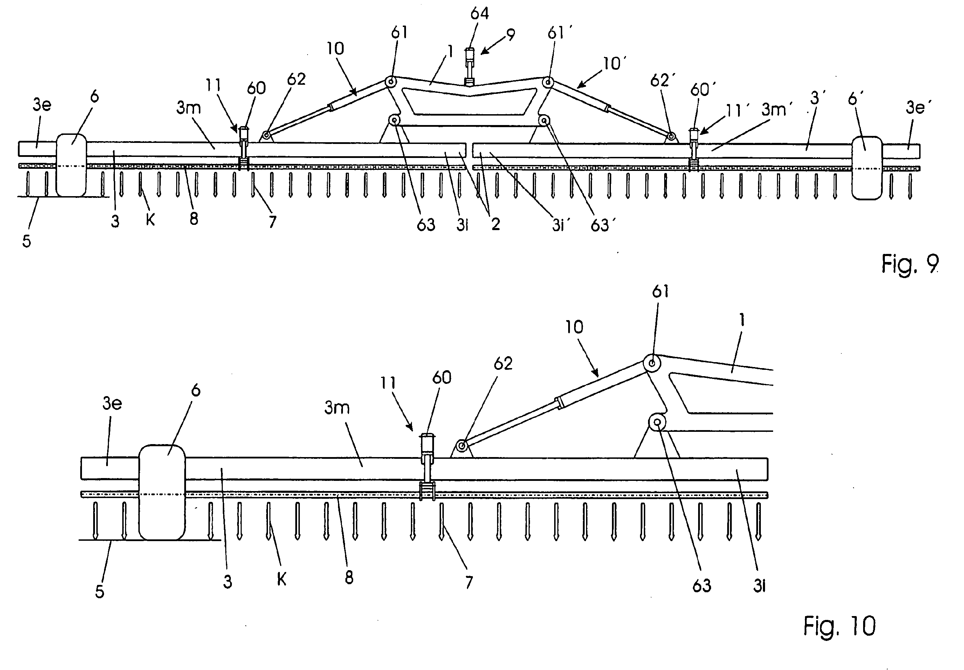

Der grundsätzliche Aufbau einer erfindungsgemäßen Saatgut- und/oder Düngerverteilmaschine, im Folgenden der Einfachheit halber als Verteilmaschine bezeichnet, ist in Figur 9 und vergrößert in Figur 10 dargestellt und zum leichteren Verständnis der Hydraulikschaltpläne gemäß Figur 1 bis Figur 8 wird zunächst der grundsätzliche Aufbau der Verteilmaschine beschrieben.

Soweit ein Vorratsbehälter für Saatgut/Dünger, Dosiereinrichtung sowie Saatgutleitungen und weitere Bauteile von Saatgut- und/oder Düngerverteilmaschinen in Figur 9 und 10 nicht dargstellt sind, dient dies ebenfalls dem leichteren Verständnis und der besseren Übersichtlichkeit der Figuren und deren Funktion/Aufbau wird als bekannt vorausgesetzt.

Alle Bauteile der Verteilmaschine sind unmittelbar oder mittelbar an einem Basisgestell 1 angebracht und/oder schwenkbar mit diesem verbunden. Das Basisgestell ist in Figur 9 und 10 stark vereinfacht dargestellt.

Als Hydraulikmedium kommt beispielsweise Hydrauliköl in Frage.

Die Fahrtrichtung der Verteilmaschine ist aus der Zeichnungsebene heraus, so dass die Verteilmaschine auf den Betrachter zufährt.

Am in Fahrtrichtung hinteren Ende des Basisgestells 1 ist ein Scharschienenrahmen 2, bestehend aus mindestens zwei Seitenarmen 3, angebracht, der im Wesentlichen parallel zum angedeuteten Ackerboden 5 ausgerichtet ist. Die in Fahrtrichtung linke und rechte Hälfte der Verteilmaschine sind mit Vorteil im Wesentlichen achsensymmetrisch ausgebildet, um eine gleichmäßige Gewichtsverteilung über die Verteilmaschine zu erreichen. Im Folgenden ist daher die Beschreibung des Ausführungsbeispiels - wie in Figur 10 dargestellt - auf eine Hälfte der Verteilmaschine beschränkt und identische Bauteile der anderen Hälfte sind jeweils mit dem gleichen Bezugszeichen und einem Hochstrich bezeichnet.

Im Bereich eines Seitenarmendes 3e, 3e' sind Tasträder 6, 6' angebracht, die die Seitenarme 3, 3' seitlich stützen. Die Tasträder 6, 6' sind gegenüber den Seitenarmen 3, 3' fest angeschlossen oder über ein Gestänge höheneinstellbar.

Eine Vielzahl von Säscharen 7 sind quer zur Fahrtrichtung aufgereiht an den Seitenarmen 3, 3' angebracht, wobei die an dritten Hydraulikzylindern 11, 11' anliegende Druckkraft oder Zugkraft über eine rotierbare Welle 8 in eine translatorische Kraft umgesetzt wird, die über Säscharfedern auf die Säschare 7 übertragen wird. Die daraus resultierende Scharkraft ist symbolisch durch Pfeile 7 dargestellt, die gleichzeitig die Kraftrichtung der Scharkraft K angeben und symbolisch für die Säschare 7 stehen.

Die dritten Hydraulikzylinder 11, 11' sind über Gelenke 60, 60', deren Gelenkachse quer zur Fahrtrichtung und parallel zu den Seitenarmen 3, 3' ausgerichtet ist, angelenkt.

Zweite Hydraulikzylinder 10, 10' sind einerseits durch Gelenke 61, 61' am Basisgestell 1 angeschlagen und andererseits über Gelenke 62, 62' in einem mittleren Bereich 3m, 3m' der Seitenarme 3, 3' angeschlagen. Die durch die zweiten Hydraulikzylinder 10, 10' ausführbare Rotation der Seitenarme 3, 3'erfolgt um die die Rotationsachse bildenden Gelenke 63, 63', an welchen die Seitenarme 3, 3' in deren Innenbereich 3i, 3i' angebracht sind. Somit kann durch Ausfahren der zweiten Hydraulikzylinder 10, 10' Druck auf die Seitenarme 3, 3' in Richtung des Ackerbodens 5 ausgeübt werden.

Über einen ersten Hydraulikzylinder 9, der über ein Gelenk 64 an einem nicht dargestellten Grundrahmen angeschlagen ist, kann der gesamte hintere Bereich in eine Wendestellung angehoben werden.

In Fig. 1 ist das die zweiten Hydraulikzylinder 10, 10' und die dritten Hydraulikzylinder 11, 11' mit Hydraulikmedium versorgende Hydrauliksystem dargestellt. Von einer Hydraulikpumpe (nicht dargestellt) wird über eine Pumpenleitung P, ein Schleppersteuerventil 16, eine Zuleitung 70 und eine Rückleitung 71 Hydraulikmedium druckbeaufschlagt in den beschriebenen Hydrauliken zur Verfügung gestellt. Die Zuleitung 70 und die Rückleitung 71 sind über Steckkupplungen 15 zwischen Schlepper und Verteilmaschine koppelbar. Zur Begrenzung des Maximaldrucks im Leitungssystems ist ein Druckbegrenzungsventil 14 vorgesehen, das die Zuleitung 70 und die Rückleitung 71 bei einem, vorzugsweise einstellbaren, Druck kurzschließt. Weiterhin ist an der Zuleitung ein Druckmessgerät 13 angeschlossen. Die zweiten Hydraulikzylinder 10, 10' und die dritten Hydraulikzylinder 11, 11' sind zwischen Zuleitung 70 und Rückleitung 71 parallel geschaltet und darüber hinaus ist ein Stickstoffspeicher 12 an der Zuleitung 70 angeschlossen. Das Druckbegrenzungsventil 14 dient zur Einstellung eines vorgebbaren Drucks, wobei der hydraulische Stickstoffspeicher 12 dazu dient, den Druck im System konstant oder auf einer flach ansteigenden Drucklinie zu halten. Bei jedem Ausklappvorgang der Seitenarme 3, 3' des Scharschienenrahmens 2 wird die Zuleitung 70 auf den vorgegebenen hydraulischen Druck gespannt. Beim Überfahren von Erhebungen wird Hydraulikmedium durch die zweiten Hydraulikzylinder 10, 10' sowie die dritten Hydraulikzylinder 11, 11' in den Stickstoffspeicher 12 verdrängt, wodurch der Schardruck/die Scharkraft K und somit die Eindringtiefe der Säschare 7 konstant gehalten wird.

Durch Verwendung eines proportional geregelten Druckbegrenzungsventils 14 kann die Einstellung des gewünschten Drucks von dem Fahrer im Führerhaus des Schleppers, beispielsweise über eine Bedieneinheit mit Display, eingestellt werden.

Zum Einklappen der Seitenarme 3, 3' wird durch das Schleppersteuerventil 16 Druck auf die Rückleitung 71 und damit die entsprechenden Flächen der doppeltwirkenden zweiten und dritten Hydraulikzylinder 10, 10', 11, 11' gegeben.

Ein Hydrauliktank (nicht dargestellt) ist über eine Tankleitung T am Schleppersteuerventil 16 angeschlossen.

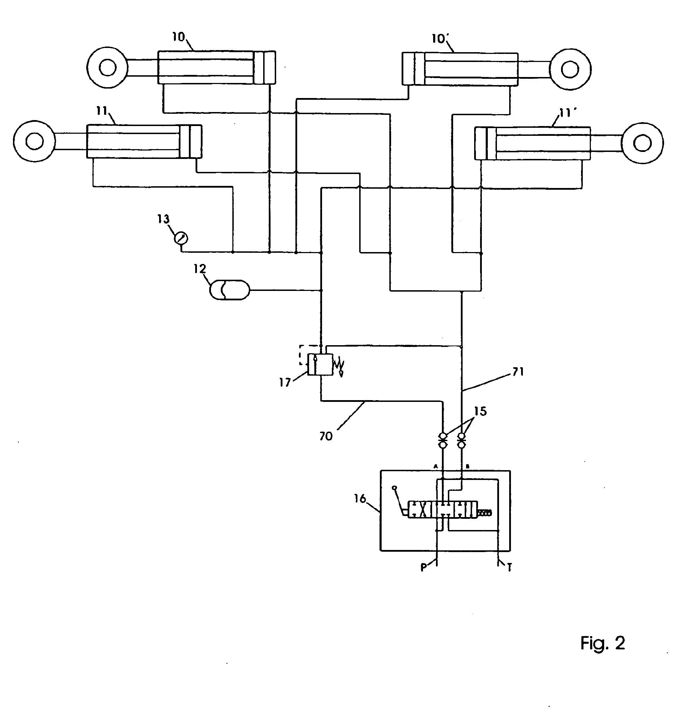

Bei der Beschreibung der weiteren Figuren 2 bis 8 wird im Wesentlichen auf die oben beschriebenen Merkmale Bezug genommen und nur auf die Unterschiede eingegangen, wobei auch Unterkombinationen der beschriebenen Bauteile - soweit sinnvoll - als mit offenbart gelten sollen.

In Figur 2 ist statt des Druckbegrenzungsventils 14 (Figur 1) ein Druckminderventil 17 verbaut, das bei größeren Hüben und damit Hydraulikmediumvolumina von Vorteil ist. Bei dieser Ausgestaltung wird vom Schleppersteuerventil 16 her immer ein stetiger Hydraulikmediumstrom zum Druckminderventil 17 zur Verfügung gestellt und das Schleppersteuerventil verbindet die weitere Leitung mit der Rückleitung 71. Hierdurch kann bei ansteigendem Druck in der Schardruckhydraulik und/oder der Scharschienenrahmhydraulik Hydraulikmedium zum Schlepper hin abgelassen werden, während die anderen Zylinderseiten Hydraulikmedium aus der Rückleitung 71 des Schleppers zur Verfügung haben und sich somit ungebremst bewegen können. Das Druckminderventil 17 kann mit einer Handverstellung ausgerüstet sein oder als proportional geregeltes Druckminderventil 17 ausgeführt sein, das wiederum über eine Fernverstellung mit Druckanzeige bedienbar ausgeführt sein kann. Ein Stickstoffspeicher 12 ist nicht zwingend notwendig

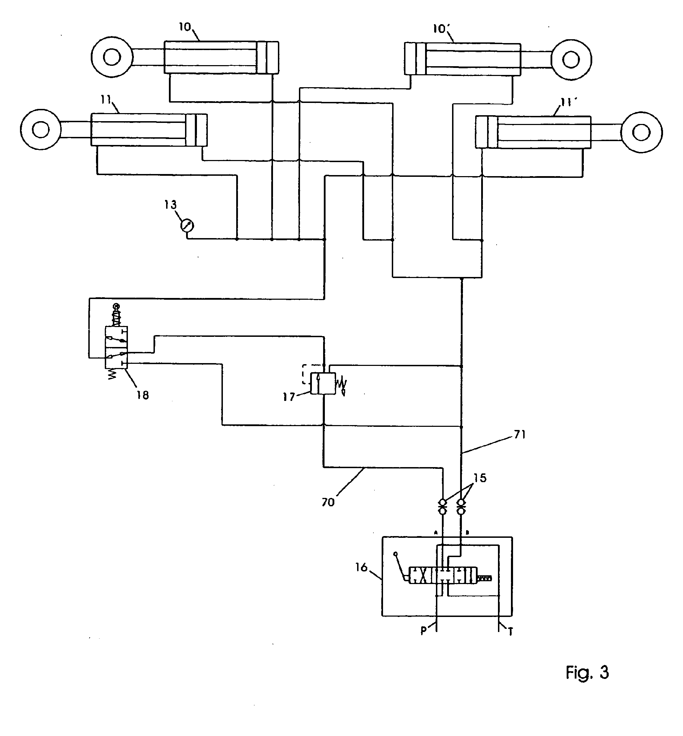

In der Ausführungsform gemäß Figur 3 wird die Hydraulikschaltung gemäß Figur 2 um ein mechanisch betätigtes 3/2-Wegeventil 18 ergänzt, das betätigt wird, sobald der gesamte Scharschienenrahmen 2 aus seiner Betriebsstellung herausbewegt wird. Durch Umschalten des 3/2-Wegeventils 18 wird durch Kurzschließen des Hydraulikkreislaufs, nämlich Zuleitung 70 und Rückleitung 71, eine Schwimmstellung der zweiten und dritten Hydraulikzylinder 10, 10', 11, 11' eingestellt, so dass die Tasträder 6, 6' nur noch das Eigengewicht der Seitenarme 3, 3' zu tragen haben und somit auf dem Vorgewende keine tiefen Spuren erzeugen.

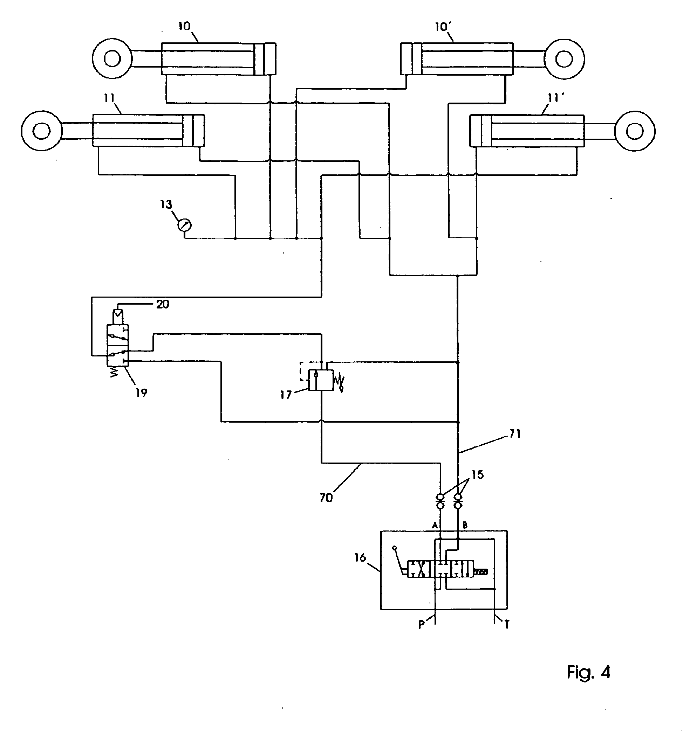

Da der Scharschienenrahmen 2 über einen oder mehrere erste Hydraulikzylinder 9 aus der Betriebsstellung herausbewegt (ausgehoben) wird, kann das 3/2-Wegeventil 19 auch als hydraulisch gesteuertes Ventil 19 ausgeführt sein, welches sein Signal über die Signalleitung 20 von dem ersten Hydraulikzylinder 9 zum Ausheben bekommt, wie es in der Ausführungsform gemäß Figur 4 dargstellt ist. Das 3/2-Wegeventil 19 kann als direkt gesteuertes Ventil oder als vorgesteuertes Ventil ausgelegt sein, bei dem erst ein bestimmter voreingestellter Druck überschritten sein muss, bevor es umschaltet.

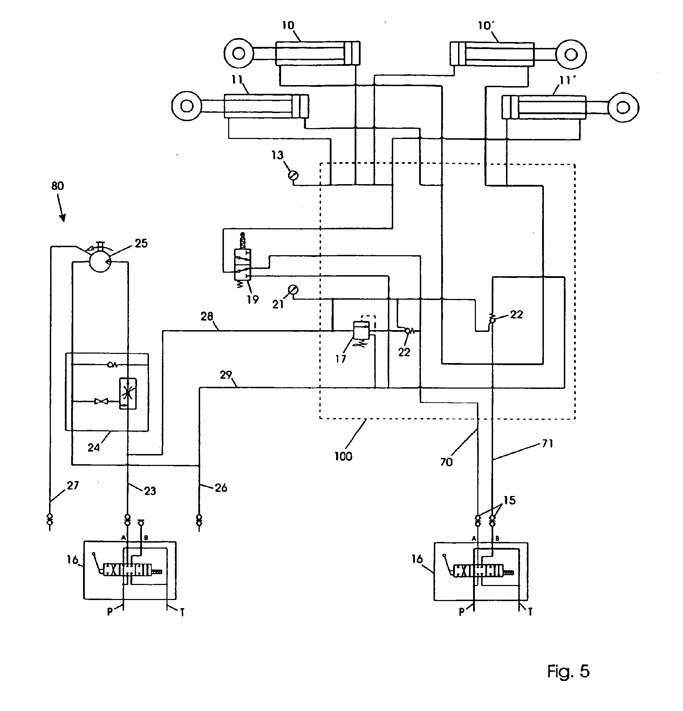

Die meisten Verteilmaschinen in dieser Arbeitsbreite verfügen über einen hydraulischen Gebläseantrieb 80, für den vom Schlepper her eine permanente Ölversorgung existiert. Diese lässt sich in vorteilhafter Weise auch für die hydraulische Steuerung/Regelung des Schardruckes mittels der Schardruckhydraulik und/oder der Scharschienenrahmenhydraulik verwenden, indem von einer Vorlaufleitung 23 des hydraulischen Gebläseantriebs 80 eine Versorgungsleitung 28 zu dem Druckminderventil 17 sowie eine Verbindungsleitung 29 zu der drucklosen Rücklaufleitung 71 eingefügt wird, wie in Figur 5 dargestellt. Das Ein- und Ausklappen der Seitenarme 3, 3' geschieht weiterhin über das direkt zugeordnete Schleppersteuerventil 16. Beim Ein- und Ausklappen sind die Versorgungsleitung 28 und die Verbindungsleitung 29 über zwei hydraulisch entsperrbare Rückschlagventile 22 geschlossen, so dass ein Rückfließen von Hydraulikmedium in Richtung des hydraulischen Gebläseantriebs 80 verhindert wird. Sobald ein Hydraulikmotor 25 des hydraulischen Gebläseantriebs 80 eingeschaltet wird, werden die Rückschlagventile 22 geöffnet, wodurch die Beaufschlagung der Schardruckhydraulik und der Scharschienenrahmenhydraulik vom hydraulischen Gebläseantrieb 80 her erfolgt. Der hydraulische Gebläseantrieb 80 ist mit einem bidirektionalen Hydraulikmotor 25 mit Leckölanschluss dargestellt. Es kann aber auch ein Hydraulikmotor 25 mit nur einer Drehrichtung verwendet werden.

Für die Bestimmung des Vorlaufdrucks des hydraulischen Gebläseantriebes 80 ist ein Druckmessgerät 21 vorgesehen.

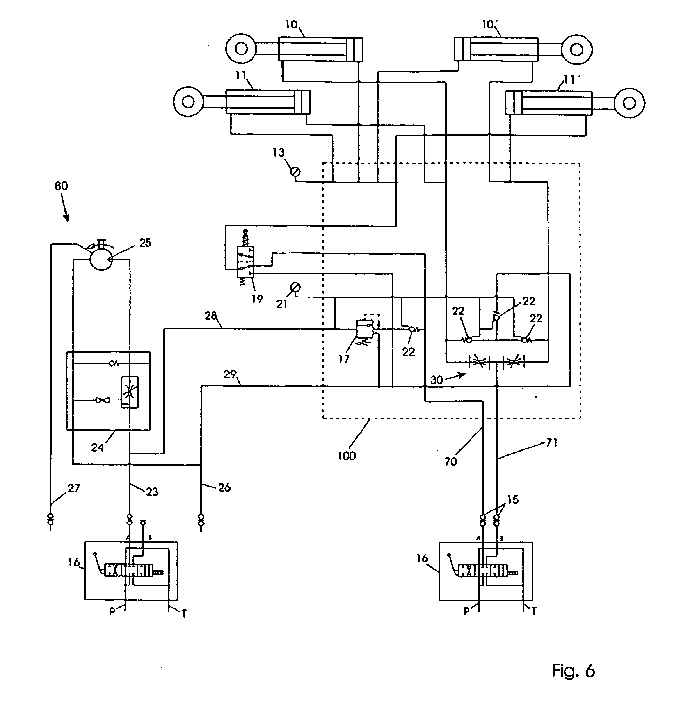

Auf Grund der beträchtlichen Arbeitsbreite weisen die Seitenarme 3, 3' mit den daran angebrachten Säscharen 7 große Massen auf, die beim Ein- und Ausklappen zum Umstürzen der Maschine führen können, wenn einer der beiden Seitenarme 3, 3' zuerst einklappt/ausklappt oder die Seitenarme 3, 3' ungleichmäßig einklappen/ausklappen. Um dies zu verhindern, wird in einer Ausführungsform gemäß Figur 6 vorgeschlagen, einen Mengenteiler 30 zwischen die zweiten und dritten Hydraulikzylinder 10, 11 der linken Hälfte der Verteilmaschine und die zweiten und dritten Hydraulikzylinder 10', 11' vorzusehen. Der Mengenteiler 30 sorgt für eine gleichmäßige Mengenaufteilung beim Ein- und Ausklappen der Seitenarme 3, 3' auf die beiden Hälften der Verteilmaschine.

Damit der Mengenteiler 30 sich nicht nachteilig auf die Funktion der Schardruckhydraulik und/oder der Scharschienenrahmenhydraulik in der Betriebsstellung auswirkt, werden zwei weitere hydraulisch entsperrbare Rückschlagventile 22 zu dem Mengenteiler 30 parallel geschaltet, die - wie die oben beschriebenen Rückschlagventile 22 - beim Betrieb des hydraulischen Gebläseantriebs 80 öffnen und die Funktion des Mengenteilers 30 aufheben.

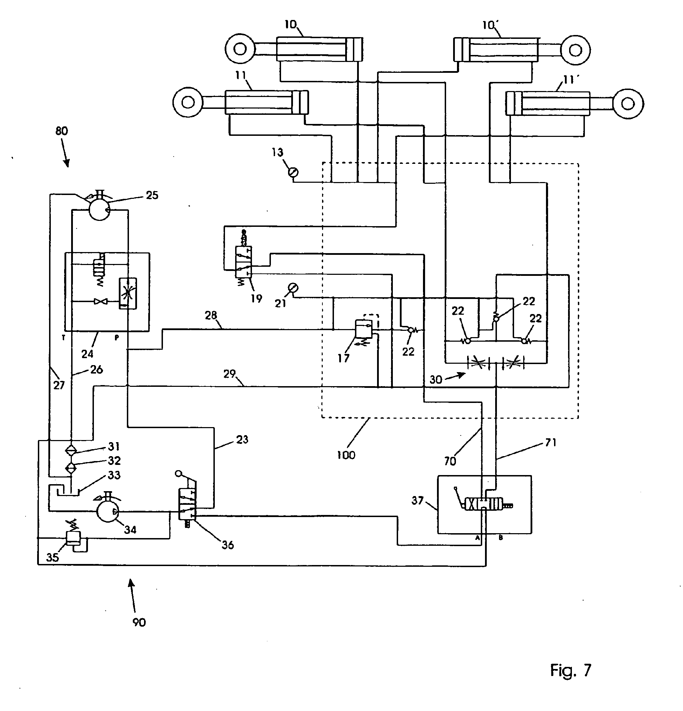

In Figur 7 ist eine Ausführungsform der Erfindung gezeigt, in der statt der Anbindung der Schardruckhydraulik und/oder der Scharschienenrahmhydraulik an den schlepperbetriebenen hydraulischen Gebläseantrieb 80 eine unabhängige Hydraulikversorgung 90 dargestellt ist. Über ein manuell betätigtes 3/2-Wegeventil 36 wird vorgewählt, ob der hydraulische Gebläseantrieb 80 mit Hydraulikmedium versorgt oder ob über ein manuell betätigtes 4/3-Wegeventil 37 das Ein- und Ausklappen der Seitenarme 3, 3' des Scharschienenrahmens 2 betätigt wird. In der unabhängigen Hydraulikversorgung 90 ist ein Druckbegrenzungsventil 35 zur Begrenzung des Drucks innerhalb der unabhängigen Hydraulikversorgung 90 vorgesehen. Die unabhängige Hydraulikversorgung 90 wird über eine Hydraulikpumpe 34 betrieben. Weiterhin ist ein Hydraulikmediumbehälter 33 mit einem das rückfließende Hydraulikmedium filternden Hydraulikmediumfilter 31 und einem dem Hydraulikmediumfilter 31 nachgeschalteten Hydraulikmediumkühler 32 vorgesehen. In den Hydraulikmediumbehälter 33 führt sowohl eine Rücklaufleitung 26 des hydraulischen Gebläseantriebs 80 sowie eine Leckölleitung 27 des hydraulischen Gebläseantriebs 80. Mit Bezugszeichen 24 ist ein Regelventil des hydraulischen Gebläseantriebs 80 gekennzeichnet.

Der hydraulische Gebläseantrieb 80 wird über das 3/2-Wegeventil 36 und über eine Vorlaufleitung 23 mit Hydraulikmedium versorgt.

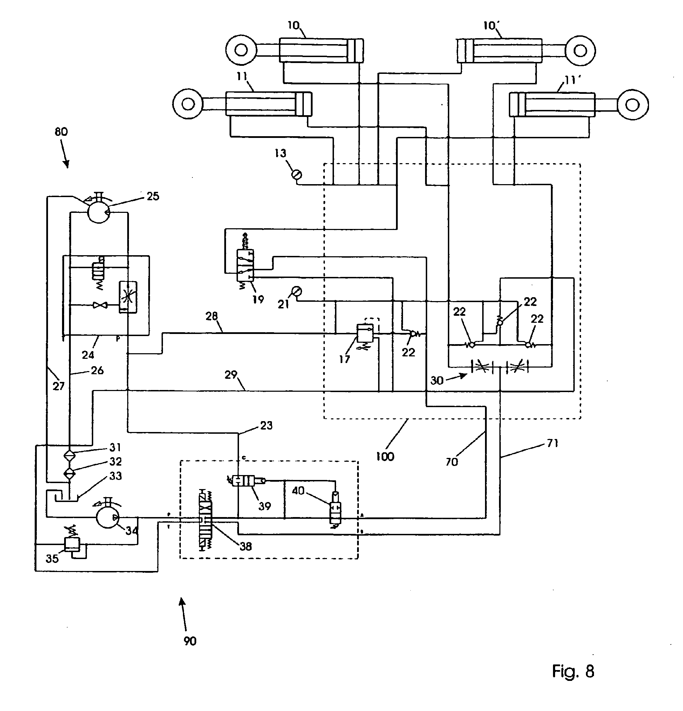

In einer weiteren Ausgestaltung der Erfindung gemäß Figur 8 ist ein elektrisch betätigtes 4/3-Wegeventil 38 vorgesehen, das die Einklappfunktion der Seitenarme 3, 3' ansteuert. Wenn die umgekehrte Schaltposition des elektrisch betätigten 4/3-Wegeventils 38 zum Ausklappen der Seitenarme 3, 3' gewählt ist, werden zunächst die Seitenarme 3, 3' ausgeklappt und anschließend wird über ein hydraulisch gesteuertes 2/2-Wegeventil 40 die Zuleitung 70 geschlossen, wodurch das Ausklappen beendet wird. Gleichzeitig wird über ein weiteres hydraulisch gesteuertes 2/2-Wegeventil 39 der hydraulische Gebläseantrieb 80 zugeschaltet. Sobald der hydraulische Gebläseantrieb 80 eingeschaltet ist, ist auch die Schardruckhydraulik und die Scharschienenrahmenhydraulik aktiviert.

### Bezugszeichenliste

- 1: Basisgestell
- 2: Scharschienenrahmen
- 3, 3': Seitenarme
- 3i, 3i': Innenbereich
- 3m, 3m': Mittelbereich
- 3e, 3e': Endbereich
- 5: Ackerboden
- 6, 6': Tasträder
- 7: Säschare
- K: Scharkraft
- 8: Welle
- 9: erster Hydraulikzylinder
- 10, 10': zweite Hydraulikzylinder
- 11, 11': dritte Hydraulikzylinder
- 12: Stickstoffspeicher
- 13: Druckmessgerät für Schardruck
- 14: Druckbegrenzungsventil
- 15: Steckkupplungen
- 16: Schleppersteuerventil
- 17: Druckminderventil
- 18: 3/2-Wegeventil, mechanisch betätigt
- 19: 3/2-Wegeventil, hydraulisch angesteuert
- 20: Signalleitung vom ersten Hydraulikzylinder
- 21: Druckmessgerät für Vorlaufdruck des hydraulischen Gebläseantriebs
- 22: hydraulisch entsperrbare Rückschlagventile
- 23: Vorlaufleitung des hydraulischen Gebläseantriebs
- 24: Regelventil des hydraulischen Gebläseantriebs
- 25: Hydraulikmotor des hydraulischen Gebläseantriebs
- 26: Rücklaufleitung des hydraulischen Gebläseantriebs
- 27: Leckölleitung des hydraulischen Gebläseantriebs
- 28: Versorgungsleitung zum Druckminderventil
- 29: Verbindungsleitung zur Rücklaufleitung des hydraulischen Gebläseantriebs
- 30: Mengenteiler
- 31: Hydraulikmediumfilter
- 32: Hydraulikmediumkühler
- 33: Hydraulikmediumbehälter
- 34: Hydraulikpumpe
- 35: Druckbegrenzungsventil der unabhängigen Hydraulikversorgung
- 36: 3/2-Wegeventil, manuell betätigt
- 37: 4/3-Wegeventil, manuell betätigt
- 38: 4/3-Wegeventil, elektrisch betätigt
- 39: 2/2-Wegeventil, hydraulisch öffnend
- 40: 2/2-Wegeventil, hydraulisch schließend
- 60, 60': Gelenk
- 61, 61': Gelenk
- 62, 62': Gelenk
- 63, 63': Gelenk
- 64, 64': Gelenk
- 70: Zuleitung
- 71: Rückleitung
- 80: Hydraulischer Gebläseantrieb
- 90: unabhängige Hydraulikversorgung
- P: Pumpenleitung von der Hydraulikpumpe (Druckversorgung)
- T: Tankleitung

## Patentansprüche

1. Saatgut- und/oder Düngerverteilmaschine zur Einbringung von Saatgut und/oder Dünger in einen Ackerboden (5) mit
- einem Basisgestell (1),
- mindestens einem mit dem Basisgestell (1) schwenkbar verbundenen Scharschienenrahmen (2) zur Aufnahme mehrerer Säschare (7),
- mindestens einer am Scharschienenrahmen (2) und den Säscharen (7) angebrachten Schardruckhydraulik zur Druck-und/oder Zugbeaufschlagung der Säschare (7) relativ zum Scharschienenrahmen (2) mit einer resultierenden, zum Ackerboden (5) gerichteten Scharkraft (K) und
- mindestens einer Scharschienenrahmenhydraulik zur Druck-und/oder Zugbeaufschlagung des Scharschienenrahmens (2) relativ zum Basisgestell (1),
**dadurch gekennzeichnet, dass**
die Schardruckhydraulik und die Scharschienenrahmenhydraulik hydraulisch gekoppelt sind.

2. Saatgut- und/oder Düngerverteilmaschine nach Anspruch 1,
**dadurch gekennzeichnet,**
**dass** der Scharschienenrahmen (2) durch mindestens einen ersten Hydraulikzylinder (9) von einer Arbeitsstellung in eine Wendestellung und weiter in eine Transportstellung schwenkbar ist.

3. Saatgut- und/oder Düngerverteilmaschine nach Anspruch 2,
**dadurch gekennzeichnet,**
**dass** der Scharschienenrahmen (2) in der Arbeitsstellung quer zur Fahrtrichtung der Verteilmaschine angeordnet ist.

4. Saatgut- und/oder Düngerverteilmaschine nach einem der vorhergehenden Ansprüche, **dadurch gekennzeichnet,**
**dass** der Druck in der Schardruckhydraulik und/oder der Scharschienenrahmenhydraulik einstellbar, insbesondere regelbar ist.

5. Saatgut- und/oder Düngerverteilmaschine nach einem der vorhergehenden Ansprüche, **dadurch gekennzeichnet,**
**dass** die resultierende Scharkraft K einstellbar, insbesondere regelbar ist, insbesondere in Abhängigkeit von vorgegebenen geographischen Koordinaten.

6. Saatgut- und/oder Düngerverteilmaschine nach einem der vorhergehenden Ansprüche, **dadurch gekennzeichnet, dass** die Schardruckhydraulik und/oder die Scharschienenrahmenhydraulik zur Versorgung mit Hydraulikmedium über eine Zuleitung (70) an eine Hydraulikpumpe anschließbar sind, insbesondere mit einem zwischen Zuleitung (70) und Hydraulikpumpe angeordneten, zur Hydraulikpumpe mit einer Pumpenleitung P geführten Schleppersteuerventil (16), wobei die Zuleitung (70) ein Druckbegrenzungsventil (14), insbesondere ein proportional geregeltes Druckbegrenzungsventil (14), aufweist.

7. Saatgut- und/oder Düngerverteilmaschine nach einem der Ansprüche 1 bis 5, **dadurch gekennzeichnet,**
**dass** die Schardruckhydraulik und/oder die Scharschienenrahmenhydraulik zur Versorgung mit Hydraulikmedium über eine Zuleitung (70) an eine Hydraulikpumpe anschließbar sind, wobei die Zuleitung ein Druckminderventil (17), insbesondere ein proportional geregeltes Druckminderventil (17), aufweist.

8. Saatgut- und/oder Düngerverteilmaschine nach einem der Ansprüche 6 oder 7, **dadurch gekennzeichnet,**
**dass** eine Rückleitung (71) zur Rückführung von Hydraulikmedium von der Schardruckhydraulik und/oder der Scharschienenrahmenhydraulik zum Schlepper, insbesondere über das Schleppersteuerventil (16), vorgesehen ist.

9. Saatgut- und/oder Düngerverteilmaschine nach einem der Ansprüche 6 bis 8, **dadurch gekennzeichnet,**
**dass** ein 3/2-Wegeventil (18, 19) zwischen Schardruckhydraulik und/oder der Scharschienenrahmenhydraulik und Hydraulikpumpe vorgesehen ist, mit dem die Schardruckhydraulik und/oder die Scharschienenrahmenhydraulik zwischen einer Betriebsstellung und einer Schwimmstellung schaltbar ist, insbesondere ausgebildet als vom ersten Hydraulikzylinder (9) mechanisch betätigtes oder hydraulisch direkt gesteuertes oder vorgesteuertes 3/2-Wegeventil (19).

10. Saatgut- und/oder Düngerverteilmaschine nach einem der vorhergehenden Ansprüche, **dadurch gekennzeichnet,**
**dass** eine Gebläsehydraulik (80) mit der Schardruckhydraulik und/oder der Scharschienenrahmenhydraulik durch eine Abzweigzuleitung (28) und eine Abzweigrückleitung (29) gekoppelt ist, wobei vorzugsweise mindestens ein Rückschlagventil (22) vorgesehen ist, um Rückfluss von Hydraulikmedium in die Gebläsehydraulik (80) zu vermeiden.

11. Saatgut- und/oder Düngerverteilmaschine nach einem der vorhergehenden Ansprüche, **dadurch gekennzeichnet,**
**dass** der Scharschienenrahmen (2) mindestens zwei quer zur Fahrtrichtung angeordnete Seitenarme (3) aufweist, an welchen die Säschare (7) angebracht sind.

12. Saatgut- und/oder Düngerverteilmaschine nach Anspruch 11,
**dadurch gekennzeichnet,**
**dass** die Scharschienenrahmenhydraulik zwei zweite Hydraulikzylinder (10) zur Ausführung der Schwenkbewegung der Seitenarme (3) aufweist.

13. Saatgut- und/oder Düngerverteilmaschine nach Anspruch 12,
**dadurch gekennzeichnet,**
**dass** die Zuleitung (70) und die Rückleitung (71) jeweils an beiden zweiten Hydraulikzylindern (10) angeschlossen sind.

14. Saatgut- und/oder Düngerverteilmaschine nach Anspruch 13,
**dadurch gekennzeichnet,**
**dass** in der Rückleitung (71) ein Mengenteiler (30) zur Gleichschaltung der Seitenarme (3) beim Einklappen der Seitenarme (3) vorgesehen ist, wobei die Funktion des Mengenteilers (30) vorzugsweise durch zwei gegeneinander gerichtete Rückschlagventile (22) aufhebbar ist.

15. Saatgut- und/oder Düngerverteilmaschine nach einem der Ansprüche 11 bis 14, **dadurch gekennzeichnet,**
**dass** an jedem der beiden Seitenarme (3) mindestens ein dritter Hydraulikzylinder (11) der Schardruckhydraulik vorgesehen ist, der die Scharkraft K, insbesondere über jedem Säschar (7) zugeordnete Zug- und/oder Druckfedern, erzeugend ausgebildet ist, die vorzugsweise mittels einer Welle (8) übertragen wird.

16. Saatgut- und/oder Düngerverteilmaschine nach Anspruch 15,
**dadurch gekennzeichnet,**
**dass** jeder dritte Hydraulikzylinder (11) mit dem korrespondierenden zweiten Hydraulikzylinder (10) des Seitenarms (3) hydraulisch gekoppelt ist.

17. Saatgut- und/oder Düngerverteilmaschine nach einem der vorhergehenden Ansprüche, **dadurch gekennzeichnet,**
**dass** die Saatgut- und/oder Düngerverteilmaschine eine unabhängige Hydraulikversorgung (90) zur Druckbeaufschlagung der Schardruckhydraulik und/oder der Scharschienenrahmenhydraulik und/oder der Gebläsehydraulik (80) anstelle der Schlepperhydraulik aufweist.

## Claims

1. Seed and/or fertilizer distributing machine for delivering seed and/or fertilizer to cultivated soil (5), with the following:
- a base frame (1),
- at least one ploughshare rail frame (2) which is pivotally connected to the base frame (1) for holding several coulters (7),
- at least one ploughshare pressure hydraulics attached to the ploughshare frame (2) and the coulters (7) for applying pressure and/or tension to the coulters (7) relative to the ploughshare rail frame (2) with a resulting shear force (K) which is directed toward the cultivated soil (5),
- at least one ploughshare rail frame hydraulics for applying pressure and/or tension to the ploughshare rail frame (2) relative to the base frame (1),
**characterized in that**
the ploughshare pressure hydraulics and the ploughshare rail frame hydraulics are hydraulically coupled.

2. Seed and/or fertilizer distributing machine as claimed in Claim 1, wherein the ploughshare rail frame (2) can be pivoted from one working position into a turning position and further into a transport position by at least a first hydraulic cylinder (9).

3. Seed and/or fertilizer distributing machine as claimed in Claim 2, wherein the ploughshare rail frame (2) is in the working position transversely to the direction of travel of the distributing machine.

4. Seed and/or fertilizer distributing machine as claimed in one of the preceding claims, wherein the pressure in the ploughshare pressure hydraulics and/or the ploughshare rail frame can be adjusted, especially can be controlled.

5. Seed and/or fertilizer distributing machine as claimed in one of the preceding claims, wherein the resulting shear force K can be adjusted, especially can be controlled, especially depending on the given geographical coordinates.

6. Seed and/or fertilizer distributing machine as claimed in one of the preceding claims, wherein the ploughshare pressure hydraulics and/or the ploughshare rail frame hydraulics for supply with hydraulic medium can be connected via a feed line (70) to a hydraulic pump, especially to a tractor control valve (16) which is routed to the hydraulic pump with a pump line P and which is located between the feed line (70) and hydraulic pump, the feed line (70) having a pressure limitation valve (14), especially a proportionally controlled pressure limitation valve (14).

7. Seed and/or fertilizer distributing machine as claimed in one of Claims 1 to 5, wherein the ploughshare pressure hydraulics and/or the ploughshare rail frame hydraulics for supply with hydraulic medium can be connected via a feed line (70) to a hydraulic pump, the feed line having a pressure reduction valve (17), especially a proportionally controlled pressure reduction valve (17).

8. Seed and/or fertilizer distributing machine as claimed in one of Claims 6 or 7, wherein there is a return line (71) for returning the hydraulic medium from the ploughshare pressure hydraulics and/or the ploughshare rail frame hydraulics to the tractor, especially via the tractor control valve (16).

9. Seed and/or fertilizer distributing machine as claimed in one of the claims 6 to 8, wherein there is a 3/2 directional control valve (18, 19) between the ploughshare pressure hydraulics and/or the ploughshare rail frame hydraulics and the hydraulic pump, with which the ploughshare pressure hydraulics and/or the ploughshare rail frame hydraulics can be switched between an operating position and a floating position, especially made as a 3/2 directional control valve (19) which is piloted or hydraulically directly controlled or mechanically actuated by a first hydraulic cylinder (9).

10. Seed and/or fertilizer distributing machine as claimed in one of the preceding claims, wherein the fan hydraulics (80) is coupled to the ploughshare pressure hydraulics and/or the ploughshare rail frame hydraulics by a branch feed line (28) and branch return line (29), preferably there being at least one nonreturn valve (22) in order to prevent backflow of the hydraulic medium into the fan hydraulics (80).

11. Seed and/or fertilizer distributing machine as claimed in one of the preceding claims, wherein the ploughshare rail frame (2) has at least two side arms (3) which are located transversely to the direction of travel and to which the coulters (7) are attached.

12. Seed and/or fertilizer distributing machine as claimed in Claim 11, wherein the ploughshare rail frame hydraulics has two second hydraulic cylinders (10) for executing the pivoting motion of the side arms (3).

13. Seed and/or fertilizer distributing machine as claimed in Claim 12, wherein the feed line (70) and the return line (71) are each connected to the two second hydraulic cylinders (10).

14. Seed and/or fertilizer distributing machine as claimed in Claim 13, wherein in the return line (71) there is a flow divider (30) for synchronization of the side arms (3) when the side arms (3) are folded in, and the function of the flow divider (30) can be cancelled preferably by two nonreturn valves (22) which are pointed opposite one another.

15. Seed and/or fertilizer distributing machine as claimed in one of Claims 11 to 14, wherein on each of the two side arms (3) there is at least one third hydraulic cylinder (11) of the ploughshare pressure hydraulics which is made to generate the shear force K, especially via tension and compression springs assigned to each coulter (7), which force is transferred preferably by means of a shaft (8).

16. Seed and/or fertilizer distributing machine as claimed in Claim 15, wherein each third hydraulic cylinder (11) is hydraulically coupled to the corresponding second hydraulic cylinder (10) of the side arm (3).

17. Seed and/or fertilizer distributing machine as claimed in one of the preceding claims, wherein the seed and/or fertilizer distributing machine has an independent hydraulic supply (90) for pressurizing the ploughshare pressure hydraulics and/or the ploughshare rail frame hydraulics and/or the fan hydraulics (80) instead of the tractor hydraulics.

## Revendications

1. Machine de répartition de semence et/ou d'engrais pour l'introduction de semence et/ou d'engrais dans un sol de labour (5) comprenant :
- un châssis de base (1)
- au moins un cadre sur rails de soc (2) relié de façon basculante au châssis de base (1) pour le logement de plusieurs socs de semis (7),
- au moins un dispositif hydraulique à pression de soc placé sur le cadre sur rails de soc (2) et les socs pour semis (7) pour l'alimentation en pression et/ou en traction du soc de semis (7) par rapport au cadre sur rails (2) avec une force de soc (K) résultante et dirigée vers le sol de labour (5) et
- au moins un dispositif hydraulique de cadre sur rails de soc pour l'alimentation en pression et/ou en traction du cadre (2) par rapport au châssis de base (1),
**caractérisée en ce que**
le dispositif hydraulique à pression de soc et le dispositif hydraulique du cadre sur rails de soc sont couplés de façon hydraulique.

2. Machine de répartition de semence et/ou d'engrais selon la revendication 1,
**caractérisée en ce que**
le cadre sur rails de soc (2) peut être basculé par au moins un premier vérin hydraulique (9) d'une position de travail dans une position de retournement et plus loin dans une position de transport.

3. Machine de répartition de semence et/ou d'engrais selon la revendication 2,
**caractérisée en ce que**
le cadre sur rails de soc (2) est disposé, dans la position de travail, transversalement au sens d'avancement de la machine de répartition.

4. Machine de répartition de semence et/ou d'engrais selon l'une quelconque des revendications précédentes, **caractérisée en ce que** la pression dans le dispositif hydraulique à pression de soc et/ou le dispositif hydraulique du cadre sur rails de soc est/sont ajustable(s), en particulier réglable(s).

5. Machine de répartition de semence et/ou d'engrais selon l'une quelconque des revendications précédentes, **caractérisée en ce que** la force de soc K résultante est ajustable, en particulier réglable, en particulier en fonction des coordonnées géographiques prédéfinies.

6. Machine de répartition de semence et/ou d'engrais selon l'une quelconque des revendications précédentes, **caractérisée en ce que** le dispositif hydraulique à pression de soc et/ou le dispositif hydraulique du cadre sur rails de soc peu(ven)t être raccordé(s) pour l'alimentation en fluide hydraulique au moyen d'une arrivée (70) à une pompe hydraulique, en particulier à une soupape de commande de tracteur (16) disposée entre la conduite d'arrivée (70) et la pompe hydraulique, guidée vers la pompe hydraulique avec une conduite de pompe P, la conduite d'arrivée (70) présentant une soupape de limitation de pression (14), en particulier une soupape de limitation de pression (14) réglée de façon proportionnelle.

7. Machine de répartition de semence et/ou d'engrais selon l'une quelconque des revendications 1 à 5, **caractérisée en ce que** le dispositif hydraulique à pression de soc et/ou le dispositif hydraulique du cadre sur rails de soc peu(ven)t être raccordé(s) pour l'alimentation en fluide hydraulique au moyen d'une conduite d'arrivée (70) à une pompe hydraulique, la conduite d'arrivée présentant une soupape de réduction de pression (17), en particulier une soupape de réduction de pression (17) réglée de façon proportionnelle.

8. Machine de répartition de semence et/ou d'engrais selon l'une quelconque des revendications 6 ou 7, **caractérisée en ce qu'**une conduite retour (71) est prévue pour le recyclage de fluide hydraulique du dispositif hydraulique à pression de soc et/ou du dispositif hydraulique du cadre sur rails de soc vers le tracteur, en particulier au moyen de la soupape de commande de tracteur (16).

9. Machine de répartition de semence et/ou d'engrais selon l'une quelconque des revendications 6 à 8, **caractérisée en ce qu'**une soupape à 3/2 canaux (18, 19) est prévue entre le dispositif hydraulique à pression de soc et/ou le dispositif hydraulique du cadre sur rails de soc et la pompe hydraulique, soupape avec laquelle le dispositif hydraulique à pression de soc et/ou le dispositif hydraulique du cadre sur rails de soc peu(ven)t être commuté(s) entre une position de service et une position flottante, en particulier est/sont conçu(s) sous forme de soupape à 3/2 canaux (19) actionnée mécaniquement par le premier vérin hydraulique (9) ou commandée ou pilotée directement de façon hydraulique.

10. Machine de répartition de semence et/ou d'engrais selon l'une quelconque des revendications précédentes, **caractérisée en ce qu'**un dispositif hydraulique de soufflerie (80) est couplé avec le dispositif hydraulique à pression de soc et/ou le dispositif hydraulique du cadre sur rails de soc par une conduite aller de dérivation (28) et une conduite retour de dérivation (29), de préférence au moins une soupape anti-retour (22) étant prévue, afin d'éviter le reflux de fluide hydraulique dans le dispositif hydraulique de soufflerie (80).

11. Machine de répartition de semence et/ou d'engrais selon l'une quelconque des revendications précédentes, **caractérisée en ce que** le cadre sur rails de soc (2) présente au moins deux bras latéraux (3) disposés transversalement au sens de marche, sur lesquels les socs de semis (7) sont placés.

12. Machine de répartition de semence et/ou d'engrais selon la revendication 11,
**caractérisée en ce que**
le dispositif hydraulique du cadre sur rails de soc présente deux seconds vérins hydrauliques (10) pour l'exécution du mouvement de basculement des bras latéraux (3).

13. Machine de répartition de semence et/ou d'engrais selon la revendication 12,
**caractérisée en ce que**
la conduite d'arrivée (70) et la conduite retour (71) sont raccordées à deux seconds vérins hydrauliques (10).

14. Machine de répartition de semence et/ou d'engrais selon la revendication 13,
**caractérisée en ce que**
un diviseur de quantité (30) est prévu dans la conduite retour (71) pour la synchronisation des bras latéraux (3) lors du rabattement des bras latéraux (3), la fonction du diviseur de quantité (30) pouvant être supprimée de préférence par deux soupapes anti-retour (22) orientées dans le sens contraire.

15. Machine de répartition de semence et/ou d'engrais selon l'une quelconque des revendications 11 à 14, **caractérisée en ce que** sur chacun des deux bras latéraux (3) est prévu au moins un troisième vérin hydraulique (11) de l'hydraulique de pression de soc, qui est conçu de façon à générer la force de soc K, en particulier au moyen de ressorts de traction et/ou de ressorts de pression attribués à chaque soc de semis (7), laquelle force est transmise de préférence au moyen d'un arbre (8).

16. Machine de répartition de semence et/ou d'engrais selon la revendication 15,
**caractérisée en ce que**
chaque troisième vérin hydraulique (11) est couplé hydrauliquement avec le second vérin hydraulique (10) correspondant du bras latéral (3).

17. Machine de répartition de semence et/ou d'engrais selon l'une quelconque des revendications précédentes, **caractérisée en ce que**
la machine de répartition de semence et/ou d'engrais présente une alimentation hydraulique (90) indépendante pour l'alimentation en pression du dispositif hydraulique à pression du soc et/ou du dispositif hydraulique du cadre sur rails de soc et/ou du dispositif hydraulique de soufflerie (80) au lieu du dispositif hydraulique du tracteur.
